# EUROPÄISCHE PATENTSCHRIFT

(11) **EP 1 202 547 B1**
(45) Veröffentlichungstag und Bekanntmachung des Hinweises auf die Patenterteilung: **12.12.2012**
(21) Anmeldenummer: 01123889.6
(22) Anmeldetag: 05.10.2001
(51) Int. Cl.: H04M 19/04

(54) **Auswahl eines Rufsignals**
Selection of a ringing signal
Selection d'un signal de sonnerie

(30) Priorität: 25.10.2000 DE 10052932
(43) Veröffentlichungstag der Anmeldung: 02.05.2002
(60) Teilanmeldung: 09004412.4
(73) Patentinhaber: SIEMENS AKTIENGESELLSCHAFT, 80333 München (DE)
(72) Erfinder: Baer, Siegfried, 75179 Pforzheim (DE); Beckmann, Mark, 38102 Braunschweig (DE); Choi, Hyung-Nam, 22117 Hamburg (DE); Gottschalk, Thomas, 12524 Berlin (DE); Hans, Martin, 31141 Hidelsheim (DE); Kowalewski, Frank, Dr., 38228 Salzgitter (DE); Laumen, Josef, 31141 Hidelsheim (DE); Schmidt, Gunnar, 38304 Wolfenbüttel (DE)

(56) Entgegenhaltungen:
- EP-A- 0 825 751
- EP-A- 0 851 649
- EP-A- 1 117 245
- EP-A- 1 278 361
- WO-A-00/36857
- WO-A-01/28221
- WO-A-96/06417
- PATENT ABSTRACTS OF JAPAN Bd. 013, Nr. 270 (E-776), 21. Juni 1989 (1989-06-21) & JP 01 060050 A (NEC CORP), 7. März 1989 (1989-03-07)
- KROLLMAN K ET AL: "DISPLAY END USER ON CELLULAR TELEPHONE (RADIO)" MOTOROLA TECHNICAL DEVELOPMENTS, MOTOROLA INC. SCHAUMBURG, ILLINOIS, US, Bd. 38, Juni 1999 (1999-06), Seite 241, XP000906111 ISSN: 0887-5286

## Beschreibung

Die Erfindung betrifft ein Verfahren zur Auswahl eines Rufsignals nach dem Oberbegriff des Anspruchs 1 sowie ein Telekommunikationsgerät nach dem Oberbegriff des Anspruchs 12.

Es ist bekannt, bei Telekommunikationsgeräten, insbesondere Telekommunikationsendgeräten, aber auch bei etwa Verteilerstationen, die eine Rufweiterleitung an ein internes Netz vornehmen können, unterschiedliche Klingeltöne als Rufsignal zur akustischen Signalisierung eines eingehenden Anrufs auswählen zu können. Die Auswahl der Klingeltöne kann sich sowohl auf die Klingelmelodie als auch auf die Lautstärke beziehen.

Der Speicher insbesondere von mobilen Telekommunikationsendgeräten ist relativ klein dimensioniert. Daher ist die Auswahl von verschiedenen Rufsignalen eng begrenzt.

Eine Erweiterung der Speichermöglichkeiten ergibt sich dann, wenn nur diejenigen Klingeltöne gespeichert werden, die vom Benutzer beispielsweise des jeweiligen Telekommunikationsendgeräts gewünscht werden. Hierzu bieten einige Mobiltelefonhersteller auf ihrer Internet-Homepage verschiedene Klingeltöne an, die auf Anforderung als SMS an den Benutzer des Telekommunikationsgeräts versandt und dann dort gespeichert werden. Dieses Verfahren ist jedoch aufwendig. Zudem ist die Zahl der abspeicherbaren Klingeltöne durch die Speichergrenzen wiederum begrenzt.

Die so gespeicherten Klingeltöne können dann vom Benutzer in gleicher Weise eingestellt werden wie die von Anfang an im Telekommunikationsgerät gespeicherten Klingeltöne. So ist es beispielsweise möglich, einen bestimmten Klingelton einem möglichen Anrufer zuzuordnen, sofern dieser ein Erkennungssignal mit versendet, was etwa bei Nutzung von ISDN oder bei Anrufen in Mobilfunknetzen möglich ist. Der Anrufer muß allerdings dann vorher bekannt sein.

Je mehr Anrufer an individuellen Signalen erkennbar sein sollen, desto mehr wird wiederum der Speicher des Telekommunikationsgeräts belastet.

Aus der EP 0825751 A2 ist die Steuerung eines Telekommunikationsempfangsgerätes durch ein Telekommunikationssendegerät, bevor das Empfangsgerät in einen Zustand "OFF HOOK" wechselt, bekannt, bei der das Sendegerät beim Aufbau einer Verbindung zu dem Empfangsgerät zu einer Verbindungsaufbaunachricht Musik-Hinweisdaten ("musical note data") hinzufügt, die die Tonbeschaffenheit bzw. Melodie eines Rufsignals spezifizieren, und die Gesamtnachricht anschließend an das Empfangsgerät sendet. In dem Empfangsgerät wird entsprechend der übermittelten Musik-Hinweisdaten ein Rufsignal generiert. Auf diese Weise kann der Anrufer (Sendegerät) dem Angerufenen (Empfangsgerät) die Dringlichkeit eines Anrufes und das persönliche Empfinden mitteilen.

Aus der EP 0851649 A2 ist eine Einrichtung und ein Verfahren zum Programmieren eines Rufsignals bekannt, bei dem das Rufsignal in Form einer Rufsignalnachricht, die z.B. als SMS-Nachricht (Short Message Service) beschaffen sein kann und eine Kennung zum Kennzeichnen der Nachricht als Rufsignal beinhaltet, an ein Mobilfunkgerät gesendet wird. Beim Empfang der Rufsignalnachricht durch das Mobilfunkgerät identifiziert dieses das Rufsignal anhand der übermittelten Kennung und wandelt das Signal in eine für die Ausgabe mittels eines Signalgenerators und Speichers geeignete Form um.

Aus der die Priorität der nachveröffentlichten EP-Patentanmeldung EP 1 117 245 A1 begründenden US-Patentanmeldung 09/469,201 ist es bekannt, bei einem anrufenden Telefon-Handapparat ausgewählte Rufzeichenanzeigeinformationen (ringing indication) an einem angerufenen Telefon-Handapparat akustisch und/oder optisch auszugeben. Als Rufsignalinformationen werden z.B. eine Klingelton-Datei (ringing tone file), eine Bildzeichen-Datei (icon file), eine Audio-Datei (audio file), insbesondere im wav-Format, eine Bild-Datei (image file), insbesondere im bmp-Format, oder eine Video-Datei (video file), insbesondere im mp2-Format verwendet, die allesamt in einem Datei-Speicher für Zugriffe durch die Telefon-Handapparate hinterlegt sind. Damit die ausgewählte Rufzeichenanzeigeinformation an dem angerufenen Telefon-Handapparat akustisch und/oder optisch ausgegeben werden kann, wird von dem anrufenden Telefon-Handapparat mit dem Verbindungsaufbau eine Rufzeicheninformation (ringing information), die die in dem Datei-Speicher hinterlegte Rufzeichenanzeigeinformation spezifiziert, an den angerufenen Telefon-Handapparat übertragen.

Aus der nachveröffentlichten EP-Patentanmeldung EP 1 221 254 A1 (WO 01/28221 A1) ist ein Verfahren zur Anrufsignalisierung bekannt, bei dem bei einem durch ein rufendes Kommunikationsendgerät ausgelösten Verbindungsaufbau - d.h. "vor", "während" oder "nach" dem Verbindungsaufbau - zu einem gerufenen Kommunikationsendgerät automatisch codierte Audioinformationen, die z.B. in Form einer Kurznachricht übermittelt werden, von dem rufenden Kommunikationsendgerät an das gerufene Kommunikationsendgerät übertragen werden, und bei dem zur Anrufsignalisierung das gerufene Kommunikationsendgerät die codierten Audioinformationen in eine Ruftonmelodie umsetzt und ausgibt.

Der Erfindung liegt das Problem zugrunde, den Einsatz von individuellen Rufsignalen zu erweitern.

Die Erfindung löst dieses Problem durch ein Verfahren mit den Merkmalen des Anspruchs 1 sowie durch ein Telekommunikationsgerät mit den Merkmalen des Anspruchs 9. Vorteilhafte Ausgestaltungen der Erfindung ergeben sich aus den abhängigen Ansprüchen 2 bis 8.

Mit dem erfindungsgemäßen Verfahren kann von Anrufern oder sonstigen Datenversendern, also Anwählenden, das jeweilige Rufsignal für einzelne Verbindungsaufbauten individuell bestimmt werden. Dadurch wird der Speicher von Angerufenen entlastet.

Der Anwählende kann sein Signal so bestimmen und dabei beispielsweise allen seinen Anrufen das gleiche Rufsignal zuordnen, was auch beim Anwählenden für eine Speicherentlastung sorgt. Besonders vorteilhaft werden jedoch verschiedenen Anrufnummern auch verschiedene Rufsignale zugeordnet, so daß etwa im privaten Bereich schon mit dem Klingelton eine persönliche Begrüßung versandt werden kann, die auf den jeweils Angerufenen individualisiert ist. Im geschäftlichen Bereich ist besonders vorteilhaft das Rufsignal als Erkennungssignal für ein Unternehmen ausgebildet, etwa als Hörmarke. Dies ist möglich durch die Verwendung von kodierten, digitalisierten Rufsignalen, beispielsweise von im MP3- oder im MPEG-4-Standard kodierten Signalen. Diese Signale können Textbestandteile wie auch Melodien enthalten. Da das Speichern bei den Angerufenen erfindungsgemäß nicht mehr zwingend ist, kann ein größerer Datenumfang des Rufsignals hingenommen werden.

Die Möglichkeit, vom Anwählenden das Rufsignal zu bestimmen, ist insbesondere auch an einem Telekommunikationsendgerät, etwa auch einem Mobiltelekommunikationsgerät, verwirklicht und erfordert keine feste Basisstation, etwa eine ISDN-Anlage oder einen Computer.

Weitere Vorteile und Einzelheiten ergeben sich aus nachfolgend beschriebenen und in der Zeichnung dargestellten Ausführungsbeispielen des Gegenstandes der Erfindung.

In der Zeichnung zeigt:
- Fig. 1: eine schematische Darstellung des erfindungsgemäßen Verfahrens bei gleichzeitiger Übertragung des den Verbindungsaufbau einleitenden Datensatzes und des Rufsignals,
- Fig. 2: eine schematische Darstellung des erfindungsgemäßen Verfahrens bei Übertragung des den Verbindungsaufbau einleitenden Datensatzes zeitlich nach dem Rufsignal,
- Fig. 3: eine schematische Darstellung des erfindungsgemäßen Verfahrens bei Übertragung des den Verbindungsaufbau einleitenden Datensatzes zeitlich vor dem Rufsignal.

In den Ausführungsbeispielen sind Verbindungen V1, V2, V3 zwischen Mobiltelekommunikationsgeräten M1, M2 dargestellt. Dies ist jedoch nicht zwingend. Auch bei fest verdrahteten Verbindungen ist die Erfindung anwendbar. Neben mobilen Endgeräten M1, M2 kommen beliebige andere Endgeräte oder auch Zwischenverteiler innerhalb einer Telekommunikationsanlage in Betracht. In jedem Fall sind ein anwählendes Telekommunikationsgerät M1 und ein angewähltes Telekommunikationsgerät M2 vorgesehen, zwischen denen eine mittelbare oder unmittelbare Verbindung V1, V2 oder V3 aufgebaut werden soll. Die Verbindung V1, V2, V3 ist nicht auf Telefonate beschränkt, sondern kann sich auf beliebigen Datenaustausch, etwa auch die Übertragung von Textdaten mit oder ohne Bild und/oder Ton, beziehen.

Vom anwählenden Telekommunikationsgerät M1 wird ein den Verbindungsaufbau einleitender Datensatz DV über ein jeweiliges Telekommunikationsnetz an das angewählte Telekommunikationsgerät M2 übertragen. Dieser Datensatz DV enthält die Identifizierung des angewählten Geräts M2.

Das Rufsignal RS kann vom Benutzer des anwählenden Geräts M1 entweder selbst komponiert oder aus einem Fundus bekannter Tonfolgen ausgewählt werden. Insbesondere ist es auch möglich, das Rufsignal RS selbst mit Texten, etwa über eine Mikrofoneingabe, zu versehen.

Die Rufsignale RS können für alle Anrufe, die vom anwählenden Gerät M1 ausgehen, gleich sein, um damit etwa im geschäftlichen Bereich immer das gleiche Erkennungssignal beispielsweise "Siemens AG - guten Tag", eventuell untermalt durch eine kurze und etwa schon aus der Fernsehwerbung bekannte Erkennungsmelodie nach Art eines Jingles, als Rufsignal RS auszusenden.

Es ist auch möglich, daß der Benutzer des anwählenden Geräts M1 verschiedenen Rufnummern auch verschiedene Rufsignale RS zuordnet, um damit individuell auf den jeweiligen Angerufenen einzugehen. Dann werden bei Anwahl unterschiedlicher Rufnummern auch unterschiedliche Rufsignale RS ausgesandt, etwa "Hallo, Oma, ich bin's" bei Anwahl einer Rufnummer oder "Hallo Schatz, geh doch mal ans Telefon" bei Anwahl einer anderen Rufnummer.

Auch im geschäftlichen Bereich kann es sehr förderlich sein, im Rufsignal RS den jeweils Angerufenen namentlich anzusprechen. Dies gibt dem Angerufenen eine Aufwertung, seine Bereitschaft, das Gespräch anzunehmen, wird erhöht.

Es ist möglich, in das Rufsignal RS auch Bildbestandteile einzubetten, so daß auf dem Display des angewählten Geräts M2 etwa ein Firmenlogo anstelle der Rufnummer eingeblendet wird. Dies ist insbesondere dann sehr effektiv, wenn Gesprächspartner angewählt werden, die die Nummer des Anrufers nicht abgespeichert haben und daher auch keinen Namen des Anrufers in ihrem Display angezeigt bekommen.

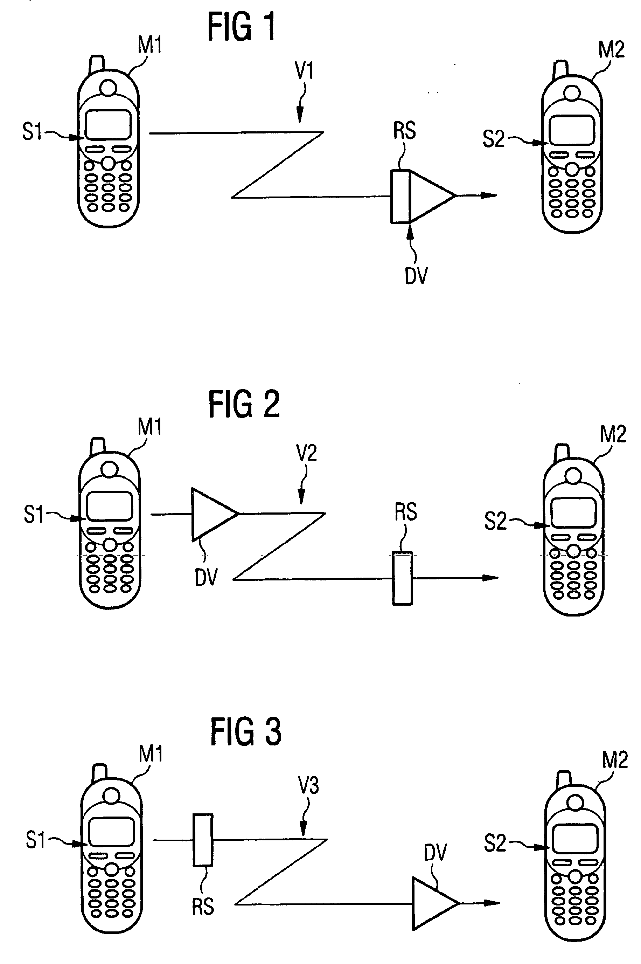

In einem ersten Ausführungsbeispiel (Fig. 1) wird als Bestandteil des Datensatzes DV das Rufsignal RS übersandt. Die Übertragung beider Signale DV und RS findet also gleichzeitig statt. Hierfür ist der Datensatz DV um beispielweise ein weiteres Feld erweitert, das das Rufsignal RS aufnimmt. Dieses ist etwa im MP-3- oder im MPEG-4-Format kodiert und wird in der kodierten und digitalisierten Form übertragen. Die Dekodierung kann dann beim angewählten Gerät M2 stattfinden, das heißt, daß das übertragene Rufsignal RS dann abgespielt wird und somit vom Benutzer des angewählten Geräts M2 akustisch und/oder optisch wahrnehmbar ist.

In einem zweiten Ausführungsbeispiel (Fig. 2) wird zunächst das Rufsignal RS übertragen und zeitlich nachfolgend der den Verbindungsaufbau einleitende Datensatz DV. Das Rufsignal RS ist dabei Bestandteil einer SMS (Short Message Service), die auch die Identifizierung des angewählten Geräts M2 enthält. Diese SMS wird beim Angewählten M2 in dessen Speicher S2 abgespeichert. Das Rufsignal RS wird bei der anschließenden Übertragung des die Verbindung einleitenden Datensatzes DV ausgelesen und dann ebenso verwendet, wie ein von vorneherein gespeichertes Anrufsignal als Ruftonfolge oder dergleichen verwendet würde.

In einem dritten Ausführungsbeispiel (Fig. 3) wird zunächst der den Verbindungsaufbau einleitende Datensatz DV und zeitlich nachfolgend das Rufsignal RS übertragen. Das Rufsignal RS ist dabei ebenfalls Bestandteil einer SMS, die auch die Identifizierung des Angewählten M2 enthält. Diese SMS wird im angewählten Gerät M2 abgespeichert. Im Datensatz DV ist dann eine Verzögerungsroutine enthalten, die das Abwarten der SMS bewirkt und die hierfür die Information enthält, daß die Signalisierung des Verbindungswunsches mit einem in Kürze nachfolgenden Rufsignal RS bewirkt werden soll. Das Rufsignal RS wird nach der anschließenden Übertragung der SMS ausgelesen und dann ebenso verwendet, wie ein von vorneherein gespeichertes Anrufsignal als Ruftonfolge oder dergleichen verwendet würde. Auch schon der aktuelle Anruf wird daher über das angewählte Gerät M2 mittels des nach dem die Verbindung einleitenden Datensatz DV übertragenen Rufsignals RS dem Angerufenen zur Kenntnis gebracht.

Bei allen Ausführungsbeispielen kann eine Abwandlung derart vorgesehen sein, daß nicht in jedem Fall das Rufsignal RS vom Anrufer übertragen wird, sondern zunächst eine Identifizierung an das angewählte Gerät M2 übersandt wird, die einem Rufsignal RS als Adressierung eindeutig zugeordnet ist und mittels deren Hilfe im Speicher S2 des angewählten Geräts M2 eine Suchroutine gestartet wird, ob dort das zu der Identifizierung gehörige Rufsignal RS bereits abgespeichert ist. Wenn dies der Fall ist, wird das abgespeicherte Signal RS als Signalisierung für den Anruf verwendet, ohne daß das Signal RS noch einmal übertragen werden müßte. Nur wenn es noch nicht beim Angewählten M2 gespeichert ist, muß es dann noch übertragen werden. Ein Abspeichern des Signals RS im Speicher des angewählten Geräts M2 kann etwa bei einem ersten Anruf dieses Geräts automatisiert oder nach einer Abfrage erfolgen.

Mit einer solchen Identifikation ist es auch möglich, daß Rufsignale RS nicht im Speicher S1 des Anrufers M1 abgelegt sein müssen, sondern etwa auf dem Server des Netzbetreibers. Dann bestimmt der Anwählende M1 immer noch das jeweilige Rufsignal RS, sendet jedoch nur die entsprechende Identifizierung an den Server, und von da aus wird das Rufsignal RS an das angewählte Gerät M2 übertragen. Damit ist sowohl beim angewählten als auch beim anwählenden Gerät M2, M1 der Speicher S2, S1 entlastet.

Insgesamt kann mit der Erfindung eine nahezu unerschöpfliche Zahl verschiedenster Rufsignale RS genutzt werden, ohne daß diese in einem Speicher S2 beim Empfänger abgelegt sein müßten. Die Möglichkeiten zur Individualisierung von Rufaufbauten sind damit erheblich vergrößert. Auch Anrufer, die vielleicht nur einmal mit einem angewählten Gerät M2 Kontakt aufnehmen, sind damit individualisierbar. Dadurch läßt sich eine verbesserte Kundenwerbung aufbauen. Insbesondere bei Verwendung gesprochener Texte als Rufsignale RS kann die Entscheidung, ob das Gespräch angenommen wird, beschleunigt werden. Es muß kein Blick auf das Display geworfen werden, sondern die Entscheidung über die Gesprächsannahme kann allein am akustischen Bestandteil des Rufsignals RS erfolgen. Damit läßt sich auch die Sicherheit des Angerufenen, etwa bei Telefonaten im Auto, verbessern.

## Patentansprüche

1. Verfahren zur Auswahl eines einen Verbindungswunsch eines anwählenden (M1) zu einem angewählten Telekommunikationsgerät (M2) signalisierenden Rufsignals (RS),bei dem das Rufsignal (RS) durch den das angewählte Telekommunikationsgerät (M2) Anwählenden (M1) bestimmt wird und für einzelne Verbindungsaufbauten individuell auswählbar ist,
**dadurch gekennzeichnet,**
**dass** die Information über das ausgewählte Rufsignal (RS) einem den Verbindungsaufbau einleitenden Datensatz (DV) zugeordnet ist und an das angewählte Telekommunikationsgerät (M2) übersandt wird, wobei die Rufsignalinformation (RS) im MP3- oder MPEG4-Format kodiert und in kodierter, digitalisierter Form zur akustischen und/oder optischen Ausgabe an das angewählte Telekommunikationsgerät (M2) übertragen wird.

2. Verfahren nach Anspruch 1,
**dadurch gekennzeichnet,**
**dass** der den Verbindungsaufbau einleitende Datensatz (DV) um einen oder mehrere Erweiterungen zur Aufnahme der Information über das ausgewählte Rufsignal (RS) ergänzt ist.

3. Verfahren nach Anspruch 1,
**dadurch gekennzeichnet,**
**dass** die Information über das ausgewählte Rufsignal (RS) zeitlich getrennt von dem den Verbindungsaufbau einleitenden Datensatz (DV) übersandt wird.

4. Verfahren nach Anspruch 3,
**dadurch gekennzeichnet,**
**dass** die Information über das ausgewählte Rufsignal (RS) als Textnachricht, insbesondere als SMS, an das angewählte Telekommunikationsgerät (M2) übertragen wird.

5. Verfahren nach Anspruch 3 oder 4,
**dadurch gekennzeichnet,**
**dass** die Information über das ausgewählte Rufsignal (RS) vor dem Verbindungsaufbau an das angewählte Telekommunikationsgerät (M2) übertragen, dort abgespeichert und für einen folgenden Verbindungsaufbau mit dem Anwählenden (M1) verwendet wird.

6. Verfahren nach Anspruch 3 oder 4,
**dadurch gekennzeichnet,**
**dass** die Information über das ausgewählte Rufsignal zeitlich nach dem den Verbindungsaufbau einleitenden Datensatz (DV) an das angewählte Telekommunikationsgerät (M2) übertragen wird, dieses mit der Abgabe des Rufsignals (RS) bis nach Abschluss der Übertragung der Information über das ausgewählte Rufsignal wartet und diese Information dann für den Verbindungsaufbau verwendet.

7. Verfahren nach Anspruch 1,
**dadurch gekennzeichnet,**
**dass** das Rufsignal (RS) eine Erkennungsmelodie mit oder ohne Textbestandteile umfasst.

8. Verfahren nach einem der Ansprüche 1 bis 7,
**dadurch gekennzeichnet,**
**dass** dem vom Anwählenden (M1) bestimmten Rufsignal (RS) eine Identifizierung zugeordnet ist, diese zur Einleitung einer Verbindung zunächst an den Angewählten (M2) übertragen und hierüber ermittelt wird, ob das entsprechende Rufsignal (RS) bereits im Speicher (S2) des Angewählten (M2) enthalten ist oder ob es zusätzlich zur Identifizierung noch übertragen werden muss.

9. Telekommunikationsgerät (M1) mit einem Speicher (S1) von zur Aufnahme von einem oder mehreren Rufsignalen (RS), wobei aus dem Speicher (S1) ein Rufsignal (RS) zur Übersendung an ein anzuwählendes Telekommunikationsgerät (M2) für einzelne Verbindungsaufbauten individuell auswählbar ist
**dadurch gekennzeichnet,**
**dass** die Information über das ausgewählte Rufsignal (RS) einem den Verbindungsaufbau einleitenden Datensatz (DV) zugeordnet ist und an das angewählte Telekommunikationsgerät (M2) übersendbar ist, wobei die Rufsignalinformation (RS) im MP3- oder MPEG4-Format kodiert und in kodierter, digitalisierter Form zur akustischen und/oder optischen Ausgabe an das angewählte Telekommunikationsgerät (M2) übertragbar ist.

## Claims

1. Method for selecting a call signal (RS) signalling a connection request from a dialling telecommunication device (M1) to a dialled telecommunication device (M2), wherein the call signal (RS) is determined by the dialling telecommunication device (M1) dialling the dialled telecommunication device (M2) and can be selected individually for single connections to be set up, **characterised in that** the information about the selected call signal (RS) is assigned to a dataset (DV) initiating the setting up of the connection and transferred to the dialled telecommunication device (M2), the call signal information (RS) being encoded in MP3 or MPEG4 format and being transmitted in encoded, digitised form to be output acoustically and/or optically to the dialled telecommunication device (M2).

2. Method according to claim 1, **characterised in that** the dataset (DV) initiating the setting up of the connection is expanded with one or more extensions to hold the information about the selected call signal (RS).

3. Method according to claim 1, **characterised in that** the information about the selected call signal (RS) is transferred at a different time from the dataset (DV) initiating the setting up of the connection.

4. Method according to claim 3, **characterised in that** the information about the selected call signal (RS) is transmitted in the form of a text message, in particular as an SMS, to the dialled telecommunication device (M2).

5. Method according to claim 3 or 4, **characterised in that** the information about the selected call signal (RS) is transmitted to the dialled telecommunication device (M2) before the connection is set up, stored there and used for a subsequent setting up of a connection involving the dialling telecommunication device (M1).

6. Method according to claim 3 or 4, **characterised in that** the information about the selected call signal (RS) is transmitted to the dialled telecommunication device (M2) at a time after the dataset (DV) initiating the setting up of the connection, said dialled telecommunication device (M2) waits to emit the call signal (RS) until after the transmission of the information about the selected call signal is completed and then uses said information for the setting up of the connection.

7. Method according to claim 1, **characterised in that** the call signal (RS) comprises an identifying melody with or without text components.

8. Method according to one of claims 1 to 7, **characterised in that** an identification is assigned to the call signal (RS) determined by the dialling telecommunication device (M1), being first transmitted to the dialled telecommunication device (M2) to initiate a connection and it being determined therefrom whether the corresponding call signal (RS) is already stored in the memory (S2) of the dialled telecommunication device (M2) or whether it still also has to be transmitted for identification purposes.

9. Telecommunication device (M1) having a memory (S1) to store one or more call signals (RS), it being possible to select a call signal (RS) individually from the memory (S1) for transfer to a telecommunication device (M2) to be dialled for the setting up of single connections, **characterised in that** the information about the selected call signal (RS) is assigned to a dataset (DV) initiating the setting up of the connection and can be transferred to the dialled telecommunication device (M2), the call signal information (RS) being encoded in MP3 or MPEG4 format and being transmitted in encoded, digitised form to be output acoustically and/or optically to the dialled telecommunication device (M2).

## Revendications

1. Procédé pour sélectionner un signal d'appel (RS) signalant une demande de liaison d'un appareil de télécommunication appelant (M1) vers un appareil de télécommunication appelé (M2), dans lequel le signal d'appel (RS) est déterminé par l'appareil (M1) qui appelle l'appareil de télécommunication appelé (M2) et peut être sélectionné individuellement pour différents établissements de liaison, **caractérisé en ce que** l'information relative au signal d'appel sélectionné (RS) est associée à un jeu de données (DV) qui initialise l'établissement de la liaison et est transmise à l'appareil de télécommunication appelé (M2), l'information relative au signal d'appel (RS) étant codée au format MP3 ou MPEG4 et transmise à l'appareil de télécommunication appelé (M2) sous une forme codée et numérisée pour production en sortie sous forme acoustique et/ou optique.

2. Procédé selon la revendication 1, **caractérisé en ce que** le jeu de données (DV) qui initialise l'établissement de la liaison est complété par une ou plusieurs extensions pour recevoir l'information relative au signal d'appel sélectionné (RS).

3. Procédé selon la revendication 1, **caractérisé en ce que** l'information relative au signal d'appel sélectionné (RS) est transmise de manière séparée dans le temps du jeu de données (DV) qui initialise l'établissement de la liaison.

4. Procédé selon la revendication 3, **caractérisé en ce que** l'information relative au signal d'appel sélectionné (RS) est transmise à l'appareil de télécommunication appelé (M2) sous la forme d'un message textuel, et plus particulièrement sous la forme d'un message SMS.

5. Procédé selon la revendication 3 ou 4, **caractérisé en ce que** l'information relative au signal d'appel sélectionné (RS) est transmise avant l'établissement de la liaison à l'appareil de télécommunication appelé (M2), y est sauvegardée et est utilisée pour un établissement de liaison subséquent avec l'appareil appelant (M1).

6. Procédé selon la revendication 3 ou 4, **caractérisé en ce que** l'information relative au signal d'appel sélectionné est transmise temporellement après le jeu de données (DV) qui initialise l'établissement de la liaison à l'appareil de télécommunication appelé (M2), **en ce que** celui-ci attend, pour délivrer le signal d'appel (RS), la terminaison de la transmission de l'information relative au signal d'appel sélectionné et **en ce que** cette information est alors utilisée pour établir la liaison.

7. Procédé selon la revendication 1, **caractérisé en ce que** le signal d'appel (RS) inclut une mélodie de reconnaissance avec ou sans éléments constitutifs textuels.

8. Procédé selon l'une des revendications 1 à 7, **caractérisé en ce qu'**une identification est associée au signal d'appel (RS) déterminé par l'appareil appelant (M1), **en ce que** celle-ci est transmise tout d'abord à l'appareil appelé (M2) pour initialiser une liaison et **en ce qu'**il est établi par cet intermédiaire si le signal d'appel correspondant (RS) est déjà contenu dans la mémoire (S2) de l'appareil appelé (M2) ou s'il doit encore être transmis en plus de l'identification.

9. Appareil de télécommunication (M1) avec une mémoire (S1) destinée à recevoir un ou plusieurs signaux d'appel (RS), un signal d'appel (RS) destiné à être transmis à un appareil de télécommunication à appeler (M2) pouvant être sélectionné individuellement à partir de la mémoire (S1) pour différents établissements de liaisons, **caractérisé en ce que** l'information relative au signal d'appel sélectionné (RS) est associée à un jeu de données (DV) qui initialise l'établissement de la liaison et peut être transmise à l'appareil de télécommunication appelé (M2), l'information relative au signal d'appel (RS) étant codée au format MP3 ou MPEG4 et pouvant être transmise à l'appareil de télécommunication appelé (M2) sous une forme codée et numérisée pour production en sortie sous forme acoustique et/ou optique.
